# EUROPEAN PATENT APPLICATION

(11) **EP 3 179 426 A1**
(43) Date of publication of application: **14.06.2017**
(21) Application number: 16175753.9
(22) Date of filing: 22.06.2016
(51) Int. Cl.: G06Q 10/10, G06Q 30/04

(54) **A SYSTEM OF ELECTRONIC GENERATION OF A CHARACTER SEQUENCE FOR A QR CODE IMAGE**

(30) Priority: 09.12.2015 SK 1032015
(71) Applicant: ADELANTE, s.r.o., 811 08 Bratislava (SK)
(72) Inventor: Vician, Martin, 841 05 Bratislava (SK)
(74) Representative: Majlingova, Marta

(57) **Abstract**

A system of electronic generation of a character sequence for a QR code image contains hardware (100) the system is preset on into an input data matrix (A) of a title by at least definition of a code type (1) of a basic operation and a document type (2). Further on, an XML file (B) of the client's data for an invoice data group, a payment data group or alternatively also for an article data group is carried out by hardware means (100) with an installed XML algorithm (101) from a client's data input (102) after selection by formatting according to the system specification.

A checksum is calculated by hardware means (100) with an installed CRC32 algorithm (103) applied on the XML file (B) of the client's data.

A compression of the XML file (B) of the client's data into a compressed XML file (C) of client's data is also carried out by hardware means (100) with an installed LZMA2 algorithm (104).

Finally, a connection of the input data matrix (A) of the title to the compressed XML file (C) of the client's data is carried out by hardware means (100) resulting into a character sequence (D) for the QR code image.

## Description

### Technical field:

The invention relates to an electronic generation system of a character sequence for a QR code image. The invention falls within the scope of electronic data processing for issuing and processing invoices and payment orders.

### State of the art:

Two dimensional codes that were originally developed for industrial application, where there was a requirement to store a large number of data in a small space, are commonly known from the prior art. The first use of two dimensional codes was on packages in the medical and the electronic industries, where available space was a main limiting factor. At present approximately twenty various two dimensional symbology types are available.

Patent application EP 2 187 346 A1 has been known, in there a document identification method preferably used in a trade, in particular in the field of commerce, warehousing, catering and the like is addressed, where said document, which is preferably a packaging list, a debit note, a delivery report, a certificate of receipt and the like, comprises at least one code record, which can be used for unequivocal identification of said document. It is provided in such a way that said code record is a two dimensional code record comprising an additional code record.

Likewise, the solution of a document exploitation, i.e. processing of documents, invoices and postal orders from various formats in order to obtain necessary data for a payment and their transformation into a QR code with use of the so called OCR (optical character recognition) technology has been known from utility model CZ 27 084. But even this technology guarantees only a 90 per cent transmission accuracy level.

Said facts resulted in an effort to design such a functional and secure concept of a system of electronic generation of a character sequence for a QR code image applied on invoices and payment orders with regard to elimination of disadvantages of a simple bar code, it would be provided for fast electronic processability of invoices, high reliability (accuracy) and simultaneously it would not occupy a substantial part of an invoice surface when using two dimensional codes. The hereinafter described invention is an outcome of the effort.

### Subject-matter of the invention

The above mentioned shortcomings are eliminated by a system of electronic generation of a character sequence for a QR code image that is eventually processed electronically by banking, financial, personal, office and ERP computer systems. At one hand it is a system of electronic encoding of invoices and payment orders into QR code images and at the other hand it is a system of decoding QR code images into invoices and payment orders. The subject-matter of the system of electronic generation of the character sequence for the QR code image according to the present invention consists in containing hardware; the system is pre-set on, into an input data matrix, a so called title by at least defining a code type of a basic operation. In the first place it is the determination of a specific type of the basic operation (a payment type, an invoice type or an article type, which is only complementary to the invoice operation). Further on, a bitwise value of the particular type of the basic operation is determined. Further on, a choice of a system version and its bitwise value are determined. A definition of a document type (a payment order, an invoice, a pro-forma invoice, a credit note, a debit note and an advance invoice) and its bitwise value are the second input attributes of generating the title. Hardware with an installed XML algorithm is present in the system. After selection and formatting according to the specification the system generates an XML file from client's data for the invoice data set, the payment data set or eventually the article data set from the client's data input. Client's data are represented by a filled XML file according to the system specification. A system diagram describes a complete list of fields, values, attributes and code lists for every code type and a corresponding document type. The XML diagram defines additional numerical values of each field. Namely, a maximum limitation of the length of the field characters and its priority. In general, the assigned length is not firmly fixed unless the data in the generated QR code exceed its capacity. The defined permissible character length only guarantees readability of the QR code in the usual quality within the physical capacity of the QR code. If the cumulated field length is higher than a defined maximum capacity, an effective filling mechanism starts. The fields are arranged according to the effective filling priority and the fields with the lowest priority number begin to fill. The system of the effective data filling mechanism serves for encoding the most important data into the QR code in its entirety.

Afterwards, a checksum is calculated by hardware means with an installed CRC32 algorithm for error data detection applied on the XML file of the client's data and it is stored. Afterwards, it is calculated again after the code decompression. The checksums must be identical in order to guarantee data integrity.

Compression of the XML file of the client's data into the compressed XML file of the client's data is also carried out on hardware means with an installed LZMA2 algorithm.

Finally, attachment of the input data matrix of the title to the compressed XML file of the client's data is carried out by hardware means resulting in a character sequence for a QR code image in the process of encoding and decoding.

Definition and selection of the relevant invoice and payment data and their sorting is such that in particular general invoice data and recapitulation of an invoice sum and one invoice item, if the invoice has only one item, are assigned into the first invoice group. Then, the XML file of the client's data is characterised for the first group by the following field order: /1/Invoice number/2/lnvoice date/3/Date of tax liability/4/Order number/5/Delivery note number/6/Local currency code/7/Foreign currency code/8/ Local currency exchange rate/9/Foreign currency exchange rate/10/Supplier's name /11 /Supplier's tax identification number/12/Supplier's VAT identification number /13/Supplier's company (taxpayer identification) number/14/Street/15/House number /16/City/17/Postal code/18/State/19/Country/20/Name of contact person/21/ Telephone number/22/E-mail/23/Purchaser's name/24/Purchaser's tax identification number/25/Purchaser's VAT identification number/26/Purchaser's company (taxpayer identification) number/27/Customer's information/28/Number of items' lines/29/ Invoice description/30/Delivery note number, on which the article is located/31/Said line (article) identification on the delivery note/32/Article name/33/EAN code/34/ Article start date/35/Article final date/36/Number of pieces of the article/37/Tax rates recapitulation list/38/Tax rate for VAT/39/Total without VAT/40/VAT total/41/Paid deposit without VAT/42/VAT from paid deposit/43/ Rounding/44/Tax-free advances /45/Payment method.

Definition and selection of the relevant invoice and payment data and their sorting is such that the payment data are assigned into the second payment group. Then, the XML file of the client's data is characterised for the second group by the following field order: /1/Invoice number/2/Number of payments/3/Payment method/4/Amount/5/ Currency code/6/Processing date/7/Variable symbol/8/Constant symbol/9/Specific symbol/10/Reference information for payee/11/Payment note/12/Account number /13/IBAN/14/BIC/15/Standing order setting-up data/16/Day/17/Month/18/Periodicity /19/Final payment date/20/Direct debit setting-up data/21/ Direct debit scheme/22/ Direct debit scheme type/23/Variable symbol/24/Specific symbol/25/Reference information for payee/26/Mandate identification between creditor and debtor according to SEPA/27/Creditor identification according to SEPA/28/Contract identification between creditor and debtor according to SEPA/29/Direct debit maximum amount/30/Direct debit validity date/31/Payee's name/32/Payee's address/33/Payee's address.

Definition and selection of the relevant invoice and payment data and their sorting is such that invoice data on each item of the invoice are assigned into the third invoice group. Then, the XML file of the client's data is characterised for the third group by the following field order: /1/Invoice number/2/Sequence number (identifier) of the first item/3/List of lines (items) of the invoice/4/Order number/5/Line (item) identification on order/6/Delivery note number/7/Line (item) identification on delivery note/8/Item description/9/EAN code of the item/10/Start date of the item/11/Final date of the item /12/Number of pieces of the item/13/Unit price without VAT/14/Tax of unit price of the item/15/VAT rate for the item.

If there is a higher amount of invoice data and/or payment data in a certain group than a maximum length of the sequence in the given group then another operation of flexible determination of a maximum length of the respective data fields (data) - character sequence, approaches the method of encoding the invoice and/or payment data. Each data field (data) is assigned a maximum length of the character sequence and its priority for the purpose of this operation. After exceeding the maximum length of the total character sequence for the specific group a maximum length of the specific data fields - character sequences is applied successively to the data fields with a higher priority, starting from the data field with the lowest priority until the maximum length of the total character sequence defined for the specific group is not exceeded.

In order to generate a two-dimensional code, e.g. the two-dimensional QR code from the resulting sequence of characters the following rules apply for a specific group:
- Exactly one two-dimensional QR code is generated for the first group
- As many two-dimensional QR codes as there are separate payments are generated for the second group
- As many two-dimensional QR codes as there are invoice items are generated for the third group
- The resulting character sequences of the second group can be merged into one and a single common two dimensional QR code is generated
- The resulting character sequences of the first group and the second group can be merged into one and a single common two dimensional QR code is generated
- The resulting character sequences of the third group can be arbitrarily merged into one or several character sequences and one or several common two dimensional QR codes are generated
- The resulting character sequences of the first to the third group can be merged into one and a single common two dimensional QR code is generated.

Advantages of the system of electronic generation of the character sequence for the QR code image according to the invention are apparent from the outwardly manifested effects. The fact that usefulness of the system is provided by generation of an electronic format and its processing is the substantial advantage. The known algorithms, such as CRC32, LZMA compression, Base32hex algorithm and an input format QR code 2005 are used therein. By application of the invention an invoice and/or a payment order contains an image in the form of a two dimensional QR code, which comprises invoice data and provides for its machine readability. However, it requires an adaptation of economic, financial and accounting software systems of companies and banks as well as designing suitable software applications for individuals in compliance with demands on protection. A company or a person receiving such an invoice is capable of a quick and effective payment by means of an electronic device (a computer, a smart telephone, a cash dispenser) by simple scanning (photographing) of the two dimensional QR code image without a need of retyping the data from the invoice.

### Brief description of the pictures on the drawings:

A system of electronic generation of a character sequence for a QR code image according to the invention will be explained in detail on the attached drawings, where Fig. 1 depicts possibilities of presetting an input data matrix, a so called title in the table format. Fig 2 depicts presetting the input data matrix, the so called title for bitwise recordal. Fig. 3 depicts generation progression of the character sequence for generating the QR code image. Fig. 4 depicts the connection of the whole system.

It is understood that individual embodiments of the invention are introduced for illustrative purposes and not as limitations of the technical solutions. Persons skilled in the art will find or will be able to find out many other equivalents to the specific exemplary embodiments of the invention with use of no more than a routine experimenting. Also said equivalents will fall within the scope of the following patent claims. For persons skilled in the art selection of suitable applications and appropriate choice of hardware components cannot pose a problem, therefore these features have not been addressed in detail.

### Example 1

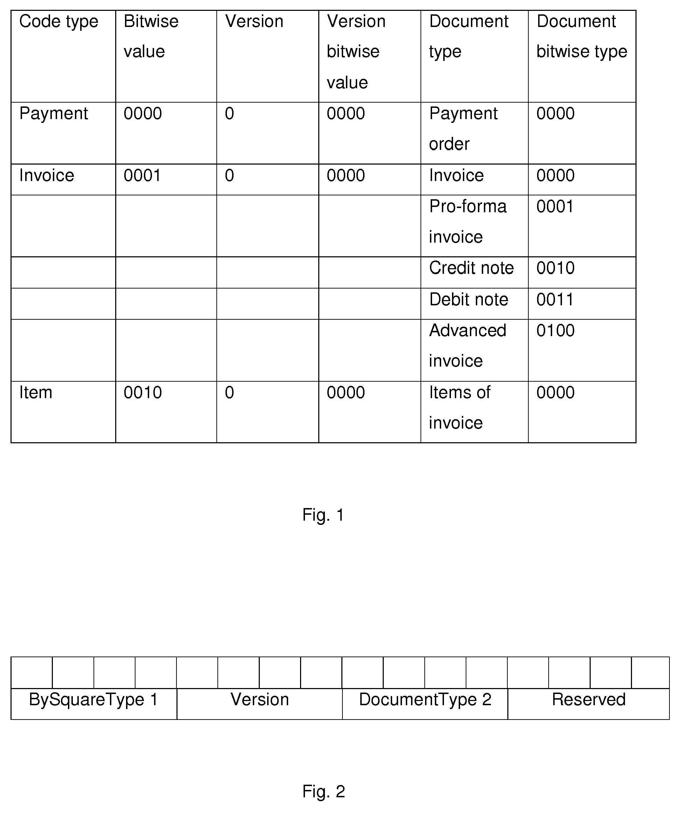

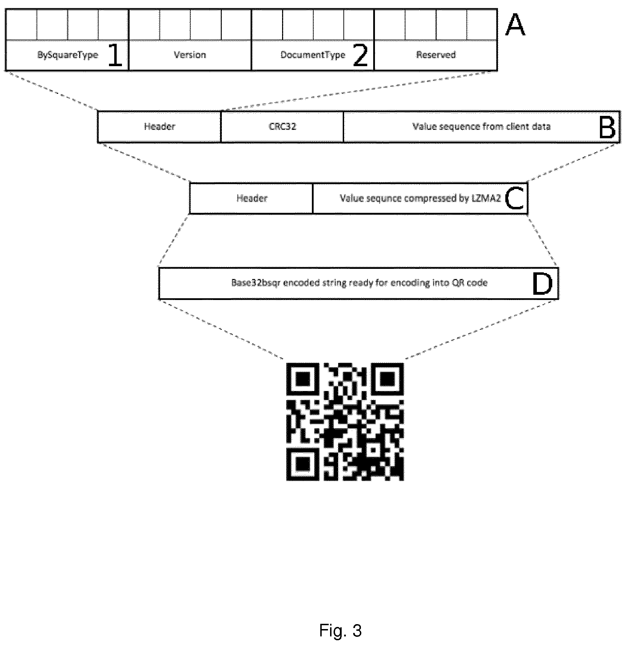

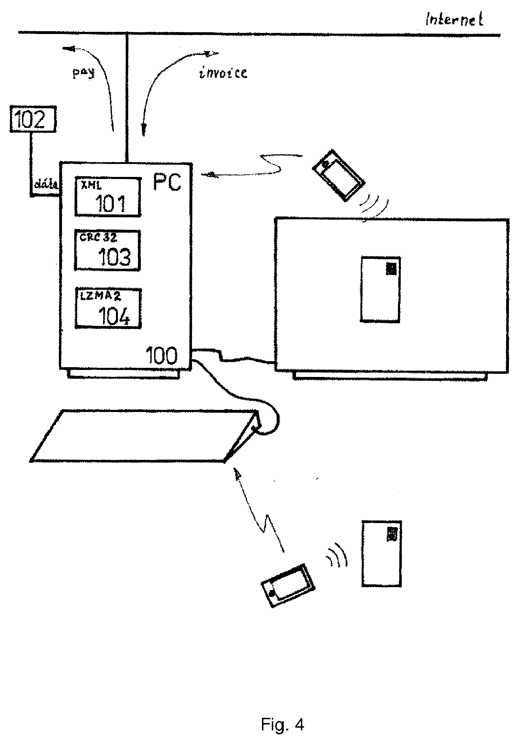

In this example of a particular embodiment according to the invention a system of electronic generation of a character sequence for a QR code image - for an invoice data group, as on the diagram on Fig. 4, is described. General invoice data and recapitulation of the invoice sum encoded into the first two dimensional QR code are contained in the invoice data group. The system is implemented on hardware means 100, the system is preset on into an input data matrix A of the title by at least definition of a code type 1 of the basic operation and by a document type 2, as depicted on Figs. 1 and 2. An XML file B of the client's data for the invoice data group, as depicted on Fig. 3, is generated from the client's data input 102 on hardware means 100 with an installed XML algorithm 101 after selection by formatting according to the system specification. The checksum is calculated on hardware means 100 with an installed CRC32 algorithm 103 applied on the XML file B of the client's data. Compression of the XML file B of the client's data into the compressed XML file C of the client's data is carried out on hardware means 100 with an installed LZMA2 algorithm 104. Finally, the attachment of the input data matrix A of the title to the compressed XML file C of the client's data is carried out by hardware means 100 resulting in the character sequence D for the QR code image in the process of encoding or decoding.

Representation of the character sequence D for generation of the QR code image - an invoice group, is as follows:
1|1|201200001|20120102|20120102|201199999|D201199999|EUR|USD|1.3506|0.74| squared s.r.o.|Jachtarska Street|4/B|Piestany|92101 |Slovak Republic|
SK1122334455|1223344|Bryan Square|+442111999|patrik.square@square.sk|111| circled s.r.o.|SK6677889900|66778899|3| |600|120|0|0|720|0|720|01|

### Example 2

In this example of a particular embodiment according to the invention it is described a system of electronic generation of a character sequence for a QR code image - for a payment data group, payment data encoded into the second two dimensional QR code image. The system is sufficiently described in Example 1, just the payment data are handled in this case. The character sequence D for the QR code image is the result thereof.

Representation of the character sequence D for generation of the QR code image - the payment group, is as follows:
1|1|201200001|720|EUR|20120131|A BANK|
SK123456789012345678901234567890|ABCDEFGH|B BANK|
SK12345678901234567890123456789012|BBCDEFGH|C BANK|
SK12345678901234567890123456789012|CBCDEFGH|1234567890|1234|123445678 90|

### Example 3

In this example of a particular embodiment according to the invention a system of electronic generation of a character sequence for a QR code image - for an item data group, the payment data encoded into the third two dimensional QR code image are comprised in. The system is sufficiently described in Example 1, just the item data are handled in this case. The character sequence D for the QR code image is the result thereof.

Representation of the character sequence D for generation of the QR code image - the article group, is as follows:
1|1|2012000011|1|201199999|1|D201199999|1|10|EUR|30|6|0.2|Sample product 1|
1|1 |201200001|2|201199999|2|D201199999|2|10|EUR|20|4|0.2|Sample product 2|
1|1|201200001|3|201199999|3|D201199999|3|10|EUR|10|2|0.2|Sample product 3|

## Claims

1. A system of electronic generation of a character sequence for a QR code image **characterised in that** it contains hardware means (100) the system is preset on into an input data matrix (A) of a title at least by definition of a code type (1) of a basic operation and a document type (2);
further, an XML file (B) of the client's data for an invoice data group, a payment data group or alternatively also for an article data group is created by hardware means (100) with an installed XML algorithm (101) from a client's data input (102) after selection by formatting according to a system specification;
further, a checksum is calculated by hardware means (100) with an installed CRC32 algorithm (103) applied on the XML file (B) of the client's data;
further, a compression of the XML file (B) of the client's data into a compressed XML file (C) of the client's data is carried out by hardware means (100) with an installed LZMA2 algorithm (104);
finally, a connection of the input data matrix (A) of the title to the compressed XML file (C) of the client's data is carried out by hardware means (100) resulting in a character sequence (D) for the QR code image in the process of encoding or decoding.

2. A system of electronic generation of a character sequence for a QR code image according to Claim 1 **characterised in that** the XML file (B) of the client's data for the payment data group is **characterised by** the following field order:
1 Invoice number
2 Number of payments
3 Payment method
4 Amount
5 Currency code
6 Processing date
7 Variable symbol
8 Constant symbol
9 Specific symbol
10 Reference information for payee
11 Payment note
12 Account number
13 IBAN
14 BIC
15 Standing order setting-up data
16 Day
17 Month
18 Periodicity
19 Final payment date
20 Direct debit setting-up data
21 Direct debit scheme
22 Direct debit scheme type
23 Variable symbol
24 Specific symbol
25 Reference information for payee
26 Mandate identification between creditor and debtor according to SEPA
27 Creditor identification according to SEPA
28 Contract identification between creditor and debtor according to SEPA
29 Direct debit maximum amount
30 Direct debit validity date
31 Payee's name
32 Payee's address
33 Payee's address.

3. A system of electronic generation of a character sequence for a QR code image according to Claim 1 **characterised in that** the XML file (B) of the client's data for the invoice data group is **characterised by** the following field order:
1 Invoice number
2 Issuance date
3 Date of tax liability
4 Order number
5 Delivery note number
6 Local currency code
7 Foreign currency code
8 Local currency exchange rate
9 Foreign currency exchange rate
10 Supplier's name
11 Supplier's tax identification number
12 Supplier's VAT identification number
13 Supplier's company (taxpayer identification) number
14 Street
15 House number
16 City
17 Postal code
18 State
19 Country
20 Name of contact person
21 Telephone number
22 E-mail
23 Purchaser's name
24 Purchaser's tax identification number
25 Purchaser's VAT identification number
26 Purchaser's company (taxpayer identification) number
27 Customer's information
28 Number of items' lines
29 Invoice description
30 Delivery note number, on which the article is located
31 Said line (article) identification on the delivery note
32 Article name
33 EAN code
34 Article start date
35 Article final date
36 Number of pieces of the article
37 Tax rates recapitulation list
38 Tax rate for VAT
39 Total without VAT
40 VAT total
41 Paid deposit without VAT
42 VAT from paid deposit
43 Rounding
44 Tax-free advances
45 Payment method

4. A system of electronic generation of a character sequence for a QR code image according to Claim 1 **characterised in that** the XML file (B) of the client's data for the article data group is **characterised by** the following field order:
1 Invoice number
2 Sequence number (identifier) of the first item
3 List of lines (items) of the invoice
4 Order number
5 Line (item) identification on order
6 Delivery note number
7 Line (item) identification on delivery note
8 Item description
9 EAN code of the item
10 Start date of the item
11 Final date of the item
12 Number of pieces of the item
13 Unit price without VAT
14 Tax of unit price of the item
15 VAT rate for the item
